# EUROPÄISCHE PATENTSCHRIFT

(11) **EP 1 518 044 B1**
(45) Veröffentlichungstag und Bekanntmachung des Hinweises auf die Patenterteilung: **21.05.2008**
(21) Anmeldenummer: 04766025.3
(22) Anmeldetag: 27.05.2004
(51) Int. Cl.: F02B 27/02, F02B 29/02, F02D 9/08, F01N 1/16

(54) **VENTILGLIED FÜR EINE ZUSATZSTEUERVENTILEINRICHTUNG**
VALVE MEMBER FOR AN AUXILIARY CONTROL VALVE DEVICE
ELEMENT DE SOUPAPE POUR SYSTEME A SOUPAPE DE COMMANDE SUPPLEMENTAIRE

(30) Priorität: 17.06.2003 DE 10327271
(43) Veröffentlichungstag der Anmeldung: 30.03.2005
(73) Patentinhaber: Continental Automotive GmbH, 30165 Hannover (DE)
(72) Erfinder: HANNEWALD, Thomas, 64347 Griesheim (DE); MANN, Thomas, 61130 Nidderau (DE); SEVERIEN, Herbert, 63589 Linsengericht (DE); COLIC, Rajko, 61350 Bad Homburg (DE)
(86) Internationale Anmeldenummer: PCT/EP2004/050949
(87) Internationale Veröffentlichungsnummer: WO 2004/111407

(56) Entgegenhaltungen:
- DE-A- 10 137 828
- DE-C- 611 659
- US-A- 2 170 478
- US-A- 4 271 862
- US-A- 4 488 566
- US-A- 4 813 452
- US-A- 4 930 539

## Beschreibung

Die Erfindung bezieht sich auf ein Ventilglied für eine Zusatzsteuerventileinrichtung. Ventilglieder für Zusatzsteuerventileinrichtungen sind bekannt. In der DE 101 37 828 A1 wird eine in einem Einlasskanal einer Kolbenbrennkraftmaschine angeordnete Zusatzsteuerventileinrichtung beschrieben. Bei dieser Zusatzsteuerventileinrichtung ist es vorgesehen, ein Ventilglied anzuordnen, das im Wesentlichen pilzförmig ausgebildet ist. Bei diesem Ventilglied ist an einem Schaft ein hutförmiger Teller angeordnet, der zu der vom Einlassventil abgewandten Seite hin konvex mit einem Scheitelpunkt ausgebildet ist. Die Eigenfrequenz des schwingungsfähigen Systems ist durch die Federkonstanten und das Gewicht des Ventilgliedes gegeben. Die magnetischen Eigenschaften des Ventilgliedes werden unter anderem durch den Wandstärkenverlauf im magnetischen Wirkbereich gewährleistet. Dabei ist es nicht erforderlich, dass der Hut aus magnetischem Material bestehen muss. Bei diesem Ventilglied ist jedoch nachteilig, dass bei der Großserienfertigung durch Kaltfließpressen gerade im Bereich erforderlicher dünner Wanddicken relativ hohe Werkzeugkräfte benötigt werden, was zu einem relativ schnellen Werkzeugverschleiß führt.

Der Erfindung liegt daher die Aufgabe zugrunde, ein Ventilglied für eine Zusatzsteuerventileinrichtung zu schaffen, das in der Großserienfertigung im Wesentlichen durch Kaltumformung hergestellt werden kann, wobei relativ hohe Werkzeugkräfte weitgehendst vermieden werden können. Darüber hinaus sollen mit dem Ventilglied relativ niedrige Schaltzeiten zu erzielen sein.

Die der Erfindung zugrundeliegende Aufgabe wird durch ein Ventilglied für eine Zusatzsteuerventileinrichtung gelöst, das aus einem Ventilschaft besteht, an dessen einem Ende ein Ventilteller angeordnet ist, der in Richtung zum Ventilschaft konkav ausgebildet ist, der außen einen durchgehend ringförmigen Bereich aufweist und der zwischen dem ringförmigen Bereich und der mittigen Verbindungsstelle zur Verbindung mit dem Ventilschaft mindestens zwei Aussparungen aufweist, die durch mindestens ein Verschlussteil verschlossen sind. Die Zusatzsteuerventileinrichtung dient zur Impulsaufladung von Otto- und Dieselmotoren. Die Impulsaufladung bewirkt dabei eine Erhöhung der Zylinderfüllung und damit eine Steigerung des Drehmoments im niedrigen und mittleren Drehzahlbereich. Der Ventilschaft ist in der Regel hohl und rohrförmig ausgebildet. Der Ventilteller ist hutförmig gestaltet. Der durchgehend ringförmige Bereich hat in der Draufsicht die Form eines Kreisringes und dient als eigentlicher Ventilsitz. Er kann aus einem anderen Material gefertigt sein als das Material, das die mindestens zwei Aussparungen voneinander trennt. Die Verbindungsstelle zur Verbindung mit dem Ventilschaft kann beispielsweise trichterförmig gestaltet sein. Es sind jedoch auch andere konstruktive Ausgestaltungen möglich. So können der Ventilteller und der Ventilschaft auch als Einzelteil gefertigt sein. Die mindestens zwei Aussparungen haben beispielsweise die Form von Halbkreisflächen. Je nach Anwendungsfall können bis zu 30 Aussparungen vorgesehen werden, welche dann schlitzförmig ausgebildet sind. Je nach Einsatzzweck kommen jedoch auch beliebig andere Lochformen zur Anwendung. Das mindestens eine Verschlussteil besteht in der Regel aus Kunststoff oder Kautschuk. Das Verschließen der mindestens zwei Aussparungen durch das mindestens eine Verschlussteil erfolgt beispielsweise dadurch, dass die mindestens zwei Aussparungen durch das mindestens eine Verschlussteil jeweils ausgefüllt werden oder dass das mindestens eine Verschlussteil jeweils in einer Aussparung in Form eines Kunststoffeinsatzes eingebracht wird.

Es hat sich in überraschender Weise gezeigt, dass das Ventilglied bei der Großserienfertigung im Wesentlichen durch Kaltumformung, wie Kaltfließpressen oder Tiefziehen, hergestellt werden kann. Lediglich die Anordnung des mindestens einen Verschlussteils erfolgt in einem zweiten Schritt. Beim Kaltfließpressen können unkonventionell hohe Werkzeugkräfte vermieden werden, was sich vorteilhaft auf die Lebensdauer der Werkzeuge auswirkt. Aufgrund der Anordnung der mindestens zwei Aussparungen kann das Ventilglied insgesamt leichter bauen, so dass niedrigere Schaltzeiten erreicht werden können als das bei Ventiltellern der Fall ist, die keine Aussparungen aufweisen.

Eine bevorzugte Ausgestaltung der Erfindung besteht darin, dass vier Aussparungen, die gleichförmig gestaltet sind, angeordnet sind, die jeweils voneinander durch Stege getrennt sind. Dabei ist vorteilhaft, dass die gewünschten mechanischen Festigkeiten sowie die Nachgiebigkeit des Ventiltellers im Bereich der vier Aussparungen auf relativ einfache Weise durch die Geometrie der Stege eingestellt werden können. Für viele Einsatzzwecke hat sich dabei beispielsweise eine Stegbreite im Bereich von 3 bis 5 mm bewährt. Eine relativ große Nachgiebigkeit kann auch dann noch eingestellt werden, wenn die Stege eine Breite von 1 mm aufweisen. In diesem Fall ist ferner vorteilhaft, dass die Gefahr der Durchrostung zusätzlich noch verringert wird, so dass die mechanische Festigkeit über relativ lange Betriebszeiten gewährleistet ist.

Gemäß einer weiteren bevorzugten Ausgestaltung der Erfindung weist der Ventilteller an der inneren Begrenzung des ringförmigen Bereiches eine umlaufende Nut auf und als Verschlussteil ist eine einzige, einteilige Kappe mit ihrer äußeren Begrenzung in die Nut eingreifend, zum ringförmigen Bereich flächenbündig fluchtend, angeordnet. Die umlaufende Nut hat die Form einer Vertiefung, weist im Querschnitt somit die Form eines Absatzes auf. Die einteilige Kappe ist aus Kunststoff gestaltet und überdeckt alle der mindestens zwei Aussparungen und verschließt somit durch Abdeckung. Sie ist flächenbündig fluchtend angeordnet, was sich vorteilhaft auf die Strömungsverhältnisse in der Zusatzsteuerventileinrichtung auswirkt. Ein absatzförmiger Übergang von der einteiligen Kappe zum ringförmigen Bereich ist somit nicht vorgesehen. Auf diese vorteilhafte Weise kann eine Entkopplung der rein mechanischen von den strömungstechnischen Eigenschaften erzielt werden. Durch die jeweilige Ausbildung der einteiligen Kappe kann die aerodynamische optimale Ausgestaltung nahezu unabhängig von der Geometrie des Ventiltellers realisiert werden. Durch ein entsprechendes Auswechseln der Kappe kann das Ventilglied auch für andere Einsatzzwecke in optimaler Weise umgerüstet werden. Das Befestigen der Kappe mit dem Ventilteller kann beispielsweise durch eine Rastverbindung erfolgen.

Eine weitere Ausgestaltung der Erfindung sieht vor, dass die als Verschlussteil angeordnete Kappe mit dem Ventilteller über eine Klebeverbindung verbunden ist. Als Klebstoff kommt dabei beispielsweise ein Zwei-Komponenten-Klebstoff, wie beispielsweise der handelsübliche Epoxydharz DP 460 oder DP 760 infrage. Dabei ist vorteilhaft, dass die Kappe auf relativ einfache Weise mit dem Ventilteller verbunden werden kann, wobei gleichzeitig auf die Anordnung von Ösen oder Einkerbungen, die beispielsweise für eine Rastverbindung erforderlich wären, verzichtet werden kann.

Die Erfindung wird nachfolgend anhand der Zeichnung (Fig. 1 bis Fig. 10) näher und beispielhaft erläutert.

Fig. 1 zeigt die Draufsicht auf einen Ventilteller.

Fig. 2 zeigt den Ventilteller im Querschnitt gemäß Schnitt A-A in Fig. 1.

Fig. 3 zeigt den Ventilteller im Querschnitt gemäß Schnitt A-A in Fig. 1 zusätzlich mit einer als Verschlussteil angeordneten einteiligen Kappe.

Fig. 4 zeigt den Ventilteller ohne einteilige Kappe in dreidimensionaler Darstellung.

Fig. 5 zeigt den Ventilteller mit einteiliger Kappe in dreidimensionaler Darstellung.

Fig. 6 zeigt das Ventilglied im Querschnitt mit dem Ventilschaft.

Fig. 7 zeigt das Ventilglied gemäß Fig. 6 in dreidimensionaler Darstellung.

Fig. 8 zeigt die Draufsicht auf ein Ventilglied nach dem Stand der Technik.

Fig. 9 zeigt ein Ventilglied nach dem Stand der Technik im Querschnitt gemäß Schnitt A*-A* gemäß Fig. 8.

Fig. 10 zeigt ein Ventilglied nach dem Stand der Technik in dreidimensionaler Form.

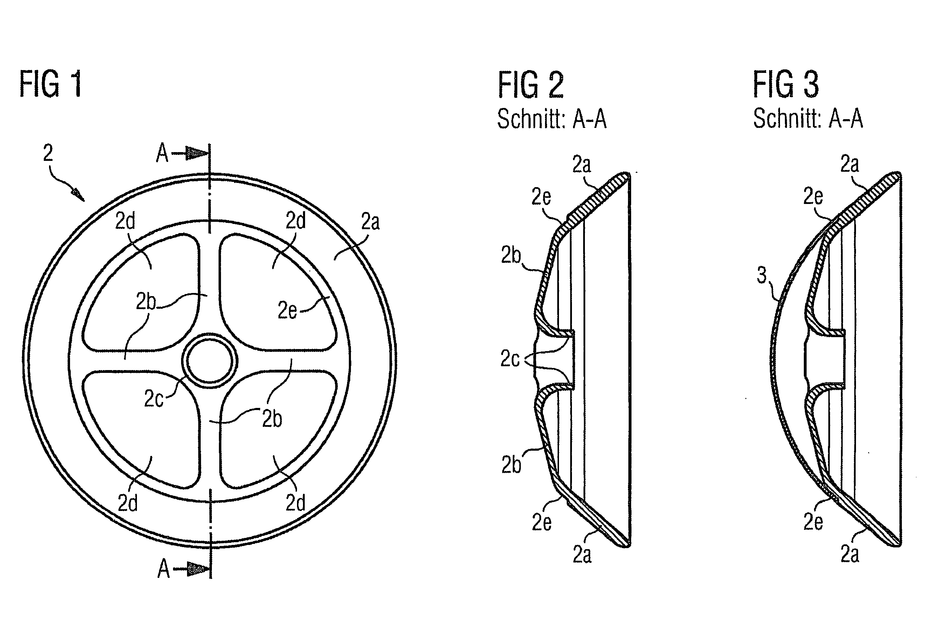

In Fig. 1 ist die Draufsicht des ventiltellers 2 des Ventilgliedes dargestellt. Der Ventilteller 2 weist außen einen durchgehend ringförmigen Bereich 2a auf. Dieser hat in der Draufsicht die Form eines Kreisringes. Zwischen dem ringförmigen Bereich 2a und einer mittigen Verbindungsstelle 2c zur Verbindung mit dem Ventilschaft (nicht dargestellt) sind vier Aussparungen 2d, die gleichförmig gestaltet sind, angeordnet. Sie sind jeweils voneinander durch Stege 2b getrennt. Auf die Darstellung des mindestens einen Verschlussteiles ist dabei aus Gründen der Übersichtlichkeit verzichtet worden. An der inneren Begrenzung des ringförmigen Bereiches ist eine umlaufende Nut 2e angeordnet. Sie dient der Fixierung des Verschlussteiles (nicht dargestellt).

In Fig. 2 ist der Ventilteller im Querschnitt gemäß Schnitt A-A in Fig. 1 dargestellt. Die Nut 2e hat die Form einer Vertiefung und ist im Querschnitt absatzförmig ausgebildet.

In Fig. 3 ist der Ventilteller nochmals im Querschnitt analog Fig. 2, jedoch zusätzlich mit einer als Verschlussteil 3 angeordneten, einzigen, einteiligen Kappe dargestellt. Die einteilige Kappe ist mit ihrer äußeren Begrenzung in die Nut 2e eingreifend, zum ringförmigen Bereich 2a flächenbündig fluchtend, angeordnet. Je nach Ausgestaltung der Kappe lassen sich Strömungsbedingungen im Inneren der Zusatzsteuerventileinrichtung (nicht dargestellt) optimieren. Darüber hinaus ist es vorteilhaft möglich, durch die Wahl der Form der Kunststoffkappe die normalerweise auftretenden Störgeräusche im Betrieb der Zusatzsteuerventileinrichtung zu minimieren. Die Verbindung der als Verschlussteil 3 angeordneten Kappe mit dem Ventilteller 2 erfolgt in besonders vorteilhafter Weise mittels einer Klebeverbindung.

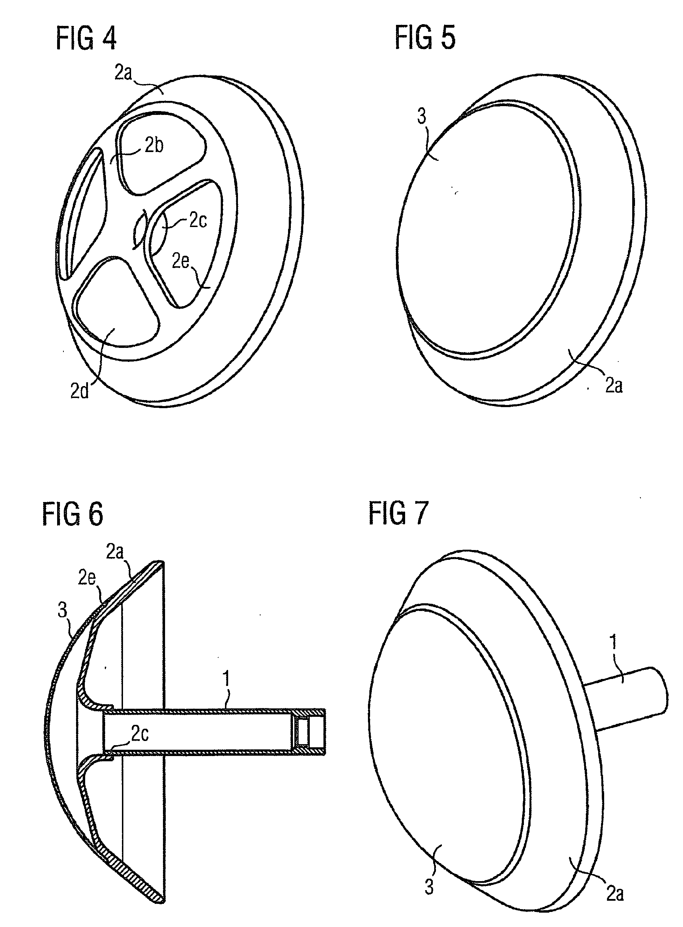

In Fig. 4 ist der Ventilteller ohne Verschlussteil dreidimensional dargestellt.

In Fig. 5 ist der Ventilteller gemäß Fig. 4 dreidimensional mit der als Verschlussteil 3 angeordneten Kappe dargestellt.

In Fig. 6 ist das Ventilglied im Querschnitt dargestellt, wobei im Vergleich zu Fig. 3 die Anordnung des Ventilschaftes 1 zusätzlich dargestellt ist. Der Ventilteller ist in Richtung zum Ventilschaft 1 konkav ausgebildet. Der Ventilschaft 1 greift an der Verbindungsstelle 2c in den Ventilteller ein, wobei es auch möglich ist, den Ventilschaft 1 und den Ventilteller als Einzelteil zu fertigen.

In Fig. 7 ist das Ventilglied gemäß Fig. 6 dreidimensional dargestellt.

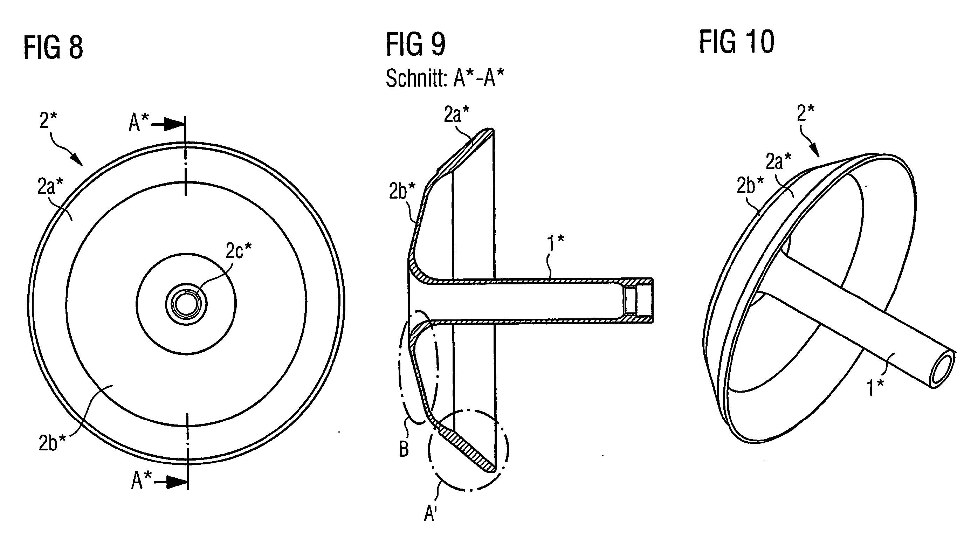

In Fig. 8 ist die Draufsicht auf ein Ventilteller 2* eines Ventilgliedes nach dem Stand der Technik dargestellt. Der Ventilteller 2* wurde zusammen mit dem Ventilschaft (nicht dargestellt) als Einzelteil aus Vollmaterial gedreht. Der Ventildeckel 2* weist außen einen durchgehend ringförmigen Bereich 2a* und einen inneren Bereich 2b* auf. Mittig ist eine Verbindungsstelle 2c* vorgesehen, an welcher der Ventilschaft (nicht dargestellt) mit dem Ventilteller 2* verbunden werden kann.

In Fig. 9 ist das Ventilglied nach dem Stand der Technik im Querschnitt gemäß Schnitt A*-A* gemäß Fig. 8 dargestellt. Der Ventilteller und der Ventilschaft 1* sind dabei als Einzelteil gefertigt. Der durchgehend ringförmige Bereich 2a* dient als eigentlicher Ventilsitz, während der innere Bereich 2b* eine erforderliche Nachgiebigkeit aufweisen muss. In der ersten Zone A', die dem durchgehend ringförmigen Bereich 2a* zuzuordnen ist, ist die Wanddicke wesentlich dicker ausgeprägt als dies in der zweiten Zone B, die dem inneren Bereich 2b* zuzuordnen ist, der Fall ist. Aufgrund dieser relativ großen Übergänge im Wanddickenbereich kommt es bei der Großserienfertigung bei einem Kaltfließprozess zu erheblichen Nachteilen, da die Ausdünnung des Ventiltellers im Bereich der zweiten Zone B unkonventionell hohe Werkzeugkräfte erfordert, die einen relativ hohen Werkzeugverschleiß nach sich ziehen. Bei dem erfindungsgemäßen Ventilglied kommt es im Ventilteller nicht zu solchen erforderlichen erheblichen Sprüngen in der Wanddicke, so dass dadurch ein Verschleiß von Werkzeugen bei der Großserienfertigung im Kaltfließprozess vermieden werden kann.

In Fig. 10 ist das Ventilglied nach dem Stand der Technik gemäß Fig. 9 dreidimensional dargestellt.

## Patentansprüche

1. Ventilglied für eine Zusatzsteuerventileinrichtung, das aus einem Ventilschaft (1) besteht, an dessen einem Ende ein Ventilteller (2) angeordnet ist, der in Richtung zum Ventilschaft (1) konkav ausgebildet ist, der außen einen durchgehend ringförmigen Bereich (2a) aufweist und der zwischen dem ringförmigen Bereich (2a) und der mittigen Verbindungsstelle (2c) zur Verbindung mit dem Ventilschaft (1) mindestens zwei Aussparungen (2d) aufweist, die durch mindestens ein Verschlussteil (3) verschlossen sind.

2. Ventilglied nach Anspruch 1, bei dem vier Aussparungen (2d), die gleichförmig gestaltet sind, angeordnet sind, die jeweils voneinander durch Stege (2b) getrennt sind.

3. Ventilglied nach Anspruch 1 oder Anspruch 2, bei dem der Ventilteller (2) an der inneren Begrenzung des ringförmigen Bereiches (2a) eine umlaufende Nut (2e) aufweist und bei dem als Verschlussteil (3) eine einzige, einteilige Kappe mit ihrer äußeren Begrenzung in die Nut (2e) eingreifend, zum ringförmigen Bereich (2a) flächenbündig fluchtend, angeordnet ist.

4. Ventilglied nach Anspruch 3, bei dem die als Verschlussteil (3) angeordnete Kappe mit dem Ventilteller (2) über eine Klebeverbindung verbunden ist.

## Claims

1. Valve element for a supplementary control valve device which is composed of a valve stem (1), at one of whose ends a valve head (2) is arranged, said valve head being of concave design in the direction of the valve stem (1), having on the outside a continuous annular region (2a) and having at least two cutouts (2d) between the annular region (2a) and the central connection point (2c) for connecting to the valve stem (1) which are closed off by at least one closure part (3).

2. Valve element according to Claim 1, in which four cutouts (2d) which are of the same shape and which are separated from each other by webs (2b) in each case are arranged.

3. Valve element according to Claim 1 or Claim 2, in which the valve head (2) has a circumferential groove (2e) on the inner boundary of the annular region (2a), and in which a single, one-part cap is arranged as a closure part (3) in such a way that it engages with its outer boundary in the groove (2e) and its surface is flush with the surface of the annular region (2a).

4. Valve element according to Claim 3, in which the cap which is arranged as a closure part (3) is connected to the valve head (2) via a bonded connection.

## Revendications

1. Elément de soupape pour système à soupape de commande supplémentaire, qui se compose d'une tige de soupape (1) à l'une des extrémités de laquelle est placé un plateau de soupape (2), qui est concave dans la direction allant vers la tige de soupape (1), qui a, à l'extérieur, une zone annulaire continue (2a) et qui comporte, entre la zone annulaire (2a) et le point central de liaison (2c) permettant la liaison avec la tige de soupape (1), au moins deux évidements (2d) qui sont fermés par au moins une pièce d'obturation (3).

2. Elément de soupape selon la revendication 1, dans lequel sont ménagés quatre évidements (2d), qui ont la même forme et qui sont séparés l'un de l'autre par des barrettes (2b).

3. Elément de soupape selon la revendication 1 ou la revendication 2, dans lequel le plateau de soupape (2) comporte, sur le bord intérieur de la zone annulaire (2a), une rainure périphérique (2e) et dans lequel est placé, en tant que pièce d'obturation (3), un seul capot en une seule pièce, qui s'insère dans la rainure (2e) par sa bordure extérieure et qui est en affleurement avec la zone annulaire (2a).

4. Elément de soupape selon la revendication 3, dans lequel le capot placé en tant que pièce d'obturation (3) est lié au plateau de soupape (2) par liaison collée.
